(19) Europäisches Patentamt / European Patent Office / Office européen des brevets

(11) **EP 4 127 055 B1**

(12) **EUROPEAN PATENT SPECIFICATION**

(45) Date of publication and mention
of the grant of the patent:
**17.09.2025 Bulletin 2025/38**

(21) Application number: **21709690.8**

(22) Date of filing: **08.03.2021**

(51) International Patent Classification (IPC):
*C08L 23/12* (2006.01)

(52) Cooperative Patent Classification (CPC):
(C-Sets available)
**C08F 10/06; C08L 23/12;** C08L 2207/02;
C08L 2308/00; C08L 2314/02          (Cont.)

(86) International application number:
**PCT/EP2021/055710**

(87) International publication number:
**WO 2021/197761 (07.10.2021 Gazette 2021/40)**

(54) **PROPYLENE POLYMER COMPOSITION**

PROPYLENPOLYMERZUSAMMENSETZUNG

COMPOSITION POLYMÈRE DE PROPYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2020 EP 20166605**

(43) Date of publication of application:
**08.02.2023 Bulletin 2023/06**

(73) Proprietor: **Basell Poliolefine Italia S.r.l.
20121 Milano (IT)**

(72) Inventor: **TARTARI, Davide
44122 Ferrara (IT)**

(74) Representative: **LyondellBasell
c/o Basell Poliolefine Italia
Intellectual Property
P.le Donegani 12
44122 Ferrara (IT)**

(56) References cited:
**EP-A1- 2 072 546          EP-A1- 2 075 284
WO-A1-2017/013096          WO-A1-2017/076701
WO-A1-2018/104092          US-A1- 2009 209 706**

• **LI RONGBO ET AL: "Correlation between chain
microstructure and mechanical properties of two
polypropylene/poly (ethylene-co-propylene) in-
reactor alloys", COLLOID & POLYMER SCIENCE,
SPRINGER VERLAG, HEIDELBERG, DE, vol. 293,
no. 4, 20 December 2014 (2014-12-20), pages
1011 - 1021, XP035477100, ISSN: 0303-402X,
[retrieved on 20141220], DOI: 10.1007/
S00396-014-3483-6**

(52) Cooperative Patent Classification (CPC): (Cont.)

C-Sets
**C08F 10/06, C08F 4/6465;**
**C08F 10/06, C08F 4/6492;**
**C08F 10/06, C08F 4/651;**
**C08F 210/06, C08F 2/001;**

**C08F 210/06, C08F 4/6574;**
**C08L 23/12, C08L 23/16;**
C08F 110/06, C08F 2500/12, C08F 2500/35;
C08F 210/06, C08F 210/16, C08F 2500/12,
C08F 2500/35, C08F 2500/17, C08F 2500/27,
C08F 2500/30, C08F 2500/31

**Description**

FIELD OF THE INVENTION

The present disclosure relates to a polypropylene copolymer composition with an improved combination of processability, stiffness and transparency. These compositions may be employed for the production of molded articles, in particular injection molded articles such as thin walled plastic containers.

BACKGROUND OF THE INVENTION

Injection molded parts for thin-walled packaging applications such as food packaging and plastic cups place specific requirements on the polymeric materials employed to produce these articles.

Polypropylene-based polymers have many characteristics, which make them suitable for applications such as molded articles, but also pipes, fittings and foams.

Frequently, polypropylene products of high stiffness are based on high molecular weight materials, which are often nucleated by adding nucleating agents, i.e. crystallization starts at a higher temperature and the crystallization speed is high

However, to increase the output rate during extrusion, a polymer of high flowability is generally preferred. This processability requirement can be achieved by low molecular weight compositions with a low viscosity, i.e. high melt flow rate (MFR) compositions, which albeit usually have less stiffness and higher haze.

One method for increasing the melt flow of heterophasic polypropylene, is visbreaking. However, visbreaking has a number of disadvantages, such as inducing an annoying odour, as well as sacrifices in rigidity and thermostability. Naturally, it would be advantageous to achieve these properties in a reactor-made composition, without an additional treatment stage.

WO 2008/074423 relates to a polypropylene composition comprising a heterophasic propylene copolymer comprising:

a) a matrix phase (A) comprising a propylene homopolymer and/or a propylene copolymer, and
b) a disperse phase (B) comprising a propylene copolymer rubber dispersed in matrix phase (A), wherein

(i) the polypropylene composition has a melt flow rate MFR2 of 50 g/10min or higher,
(ii) the propylene copolymer rubber of the disperse phase (B) has a comonomer content of 40 wt.% or higher, WO 2008/074423 is completely silent about the haze value and furthermore component (ii) contains an high amount of comonomer.

It has now been found that by fine tuning a polypropylene copolymer composition containing propylene homopolymer and propylene ethylene homopolymer it is possible to obtain an high melt flow rate (MFR, measured according to ISO 1133 at 230 °C with a load of 2.16 kg) copolymer having good mechanical properties and good haze.

SUMMARY OF THE INVENTION

Thus, the present disclosure provides a polypropylene composition comprising: A) From 96 wt% to 80 wt%; of a propylene homopolymer having a fraction insoluble in xylene at 25°C greater than 90 wt%; and a melt flow rate, MFR, measured according to ISO 1133 at 230 °C with a load of 2.16 kg comprised between 80.0 g/10 min and 300.0 g/10 min; B) From 4 wt% to 20 wt%; of a propylene ethylene copolymer having an ethylene derived units content ranging from 18 wt% to 38 wt%;

said polypropylene composition having:

i) xylene soluble fraction at 25°C ranging from 5 wt% to 13.0 wt%;
ii) the ethylene derived units content on the fraction insoluble in xylene at 25°C ranging from 0.5 wt% to 3.5 wt%;
iii) the ethylene derived units content on the fraction soluble in xylene at 25°C ranging from 17.2 wt% to 27.0 wt%
iv) the $C^{13}$ NMR sequences PPE ranging from 3.50 mol% to 5.65 mol% and the $C^{13}$ NMR sequences PEE measured on the fraction soluble in xylene at 25°C ranging from 7.85 mol% to 11.00 mol%;
(v) melt flow rate, MFR, measured according to ISO 1133 at 230 °C with a load of 2.16 kg, comprised between 80.0 g/10 min and 150.0 g/10 min;

the sum of the amounts of A) and B) being 100 wt% .

## DETAILED DESCRIPTION OF THE INVENTION

Thus, the present disclosure provides a polypropylene composition comprising: A) from 96 wt% to 80 wt%; , preferably from 95 wt% to 85 wt%; more preferably from 93 wt% to 87 wt% of a propylene homopolymer having a fraction insoluble in xylene at 25°C greater than 90 wt%; preferably greater than 94 wt%; and a melt flow rate, MFR, measured according to ISO 1133 at 230 °C with a load of 2.16 kg comprised between 80.0 g/10 min and 300.0 g/10 preferably comprised between 100.0 g/10 min and 250.0 g/10; more preferably comprised between 150.0 g/10 min and 220.0 g/10; B) from 4wt% to 20 wt%; , preferably from 5 wt% to 15 wt%; more preferably from 7 wt% to 13 wt% of a propylene ethylene copolymer having an ethylene derived units content ranging from 18 wt% to 38 wt%; preferably from 22 wt% to 31 wt%; more preferably 25 wt% to 29 wt%; and a melt flow rate, MFR, measured according to ISO 1133 at 230 °C with a load of 2.16 kg comprised between 80.0 g/10 min and 150.0 g/10 preferably comprised between 90.0 g/10 min and 130.0 g/10; more preferably comprised between 95.0 g/10 min and 120.0 g/10;

said polypropylene composition having:

i) xylene soluble fraction at 25°C ranging from 5 wt% to 13 wt%; preferably from 6 wt% to 12 wt%; more preferably from 7 wt% to 11 wt;
ii) the ethylene derived units content on the fraction insoluble in xylene at 25°C ranging from 0.5 wt% to 3.5 wt%; preferably from 0.8 wt% to 2.5 wt%; more preferably from 1.1 wt% to 2.1 wt%;
iii) the ethylene derived units content on the fraction soluble in xylene at 25°C ranging from 17.2 wt% to 27.0 wt%; preferably from 17.8 wt% to 21.3 wt%; more preferably from 18.2 wt% to 20.5 wt%;
iv) the $C^{13}$ NMR sequences PPE ranging from 3.50 mol% to 5.65 mol%; preferably from 3.80 mol% to 5.00 mol%; more preferably from 4.10 mol% to 4.80 mol%; and the $C^{13}$ NMR sequences PEE measured on the fraction soluble in xylene at 25°C ranging from 7.85 mol% to 11.00 mol%; preferably from 8.00 mol% to 10.80 mol%; more preferably from 8.20 mol% to 9.80 mol%;
v) a melt flow rate, MFR, measured according to ISO 1133 at 230 °C with a load of 2.16 kg comprised between 80.0 g/10 min and 150.0 g/10 preferably comprised between 90.0 g/10 min and 130.0 g/10; more preferably comprised between 95.0 g/10 min and 120.0 g/10;

the sum of the amounts of A) and B) being 100 wt%.

For the present disclosure, the term "copolymer" is referred to polymers containing only two kinds of comonomers, such as propylene and ethylene.
The polypropylene composition of the present disclosure is not subjected to a chemical or physical visbreaking, i.e. the MFR is obtained with the polymerization process.
Preferably in the polypropylene composition the ratio r1r2 measured with $C^{13}$ NMR is comprised between 1.98 and 3.48; preferably between 2.20 and 2.95.
Preferably in the polypropylene composition the intrinsic viscosity measured on the fraction soluble in xylene at 25°C ranges from 0.9 to 2.3 dl/g; preferably from 1.1 to 2.0 dl/g; more preferably from 1.2 to 1.8 dl/g.
The polypropylene composition according to the present disclosure is characterized by having low haze, good mechanical properties and high melt flow rate. These features due to the particular polymerization process used and the particular Ziegler Natta catalyst used in the polymerization make the polypropylene composition according to the present disclosure particularly fit for the production of injection molded articles, in particular thin layer injection molded articles.
The polypropylene composition of the present disclosure is obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium. Preferably component B) is polymerized in a gas phase process in the presence of component A)
The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.
The polypropylene composition herein disclosed is prepared by a process comprising homopolymerizing propylene in a first stage and then propylene with ethylene in a second stage, both stages being conducted in the presence of a catalyst comprising the product of the reaction between:

(i) a solid catalyst component comprising Ti, Mg, Cl, and at least one electron donor compound characterized by the fact that it contains from 0.1 to 50%wt of Bi with respect to the total weight of said solid catalyst component; the external donor being preferably esters of glutaric acid, preferably alkyl esters of glutaric acid such as I 3,3-dipropylglutarate; preferably the ester of glutaric acid are used in mixture with 9,9-bis(alkoxymethyl)fluorene such as 9,9-bis(methoxymethyl)fluorene; the molar ratio between preferably esters of glutaric acid and 9,9-bis(alkoxymethyl)fluorene being from 50:50 to 90:10; preferably from 60:40 to 80:20; more preferably from 65:35 to 75:25; the alkyl radical being C1-C10 alkyl radical such as methyl, ethyl propyl; butyl radicals;1

(ii) an alkylaluminum compound; and

(iii) an external electron-donor compound having the general formula:

$$(R^1)_a Si(OR^2)_b$$

wherein $R^1$ and $R^2$ are independently selected among alkyl radicals with 1-8 carbon atoms, optionally containing heteroatoms, a is 0 or 1, and a+b=4.

Preferably, in the catalyst component the content of Bi ranges from 0.5 to 40%wt, more preferably from 1 to 35% wt, especially from 2 to 25%wt and in a very particular embodiment from 2 to 20%wt.

The particles of the solid component have substantially spherical morphology and an average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5, and preferably lower than 1.3.

In general, the amount of Mg preferably ranges from 8 to 30%wt, more preferably from 10 to 25%wt.

Generally, the amount of Ti ranges from 0.5 to 5%wt, and more preferably from 0.7 to 3%wt.

The Mg/Ti molar ratio is preferably equal to, or higher than, 13, preferably in the range of 14 to 40, and more preferably from 15 to 40. Correspondingly, the Mg/donor molar ratio is preferably higher than 16, more preferably higher than 17 and usually ranging from 18 to 50.

The Bi atoms are preferably derived from one or more Bi compounds not having Bi-carbon bonds. In particular, the Bi compounds can be selected from Bi halides, Bi carbonate, Bi acetate, Bi nitrate, Bi oxide, Bi sulphate, and Bi sulfide. Compounds in which Bi has the valence state of 3+ are preferred. Among Bi halides, preferred compounds are Bi trichloride and Bi tribromide. The most preferred Bi compound is BiCls.

The preparation of the solid catalyst component can be carried out according to several methods. According to one method, the solid catalyst component can be prepared by reacting a titanium compound of the formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be prepared in spherical form by mixing alcohol and magnesium chloride, operating under stirring conditions at the melting temperature of the adduct (100-130°C). Then, the adduct is mixed with an inert hydrocarbon immiscible with the adduct, thereby creating an emulsion which is quickly quenched, causing the solidification of the adduct in form of spherical particles. Examples of spherical adducts prepared according to this procedure are described in USP 4,399,054 and USP 4,469,648. The resulting adduct can be directly reacted with a Ti compound, or it can be previously subjected to thermally controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or not) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides, and in particular BiCls.

The alkyl-Al compound (ii) is preferably chosen from among the trialkyl aluminum compounds such as, for example, triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in a mixture with the above cited trialkylaluminums. The Al/Ti ratio is higher than 1 and is generally between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_b Si(OR_8)_c$, where

a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Without to be bound by a theory it is believed that the particular catalyst system used for obtaining the polypropylene composition of the present disclosure gives rise to a polymer having a particular crystallinity due to the distribution of ethylene in the xylene soluble and insoluble fraction at 25°C.

Thus high transparency and good mechanical properties can be obtained even at high MFR values so that it can be advantageously used for the production of injection molding articles..

The polypropylene composition of the present disclosure can contain the additives that are commonly used in the art such as anti-oxidants, process stabilizers, slip agents, antistatic agents, antiblock agents, antifog agents and nucleating agents.

The following examples are given to illustrate, not to limit, the present disclosure:

EXAMPLES

**Xylene-soluble (XS) Fraction at 25 °C**

Xylene Solubles at 25°C have been determined according to ISO 16 152; with solution volume of 250 ml, precipitation at 25°C for 20 minutes, 10 of which with the solution in agitation (magnetic stirrer), and drying at 70°C.

**Melt Flow Rate (MFR)**

Measured according to ISO 1133 at 230 °C with a load of 2.16 kg, unless otherwise specified.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter, which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine $[\eta]$.

**Determination of the Haze**

Injection molded speciments prepared according to ISO 1873-2, and ISO 294 have been used. The haze value is measured using a Gardner photometric unit connected to a Hazemeter type UX-10 or an equivalent instrument having G.E. 1209 light source with filter "C". Reference samples of known haze are used for calibrating the instrument according to .

**Flexural modulus**

Determined according to IS0 178 and supplemental condition according to ISO 1873-2 with specimen injection moulded.

### Charpy

Charpy impact test according to ISO 179-1eA, e ISO 1872-2.

### Ethylene content in the copolymers

$^{13}$C NMR spectra were acquired on a Bruker AV-600 spectrometer equipped with cryoprobe, operating at 160.91 MHz in the Fourier transform mode at 120 °C.

The peak of the $S\beta\beta$ carbon (nomenclature according to "Monomer Sequence Distribution in Ethylene-Propylene Rubber Measured by $^{13}$C NMR. 3. Use of Reaction Probability Mode " C. J. Carman, R. A. Harrington and C. E. Wilkes, Macromolecules, 1977, 10, 536) was used as an internal reference at 29.9 ppm. The samples were dissolved in 1,1,2,2-tetrachloroethane-*d2* at 120 °C with a 8 % wt/v concentration. Each spectrum was acquired with a 90° pulse, and 15 seconds of delay between pulses and CPD to remove $^1$H-$^{13}$C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$
$$PEP = 100 \ S\beta\beta/S \qquad PEE = 100 \ S\beta\delta/S \qquad EEE = 100 \ (0.25 \ S\gamma\delta+0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:

E% mol = 100 * [PEP+PEE+EEE]The weight percentage of ethylene content was evaluated using the following equation:

$$E\% \ wt. = \frac{E\% \ mol * MWE}{E\% \ mol * MWE + \ P\% \ mol * MWP}$$

where P% mol is the molar percentage of propylene content, while MWE and MWP are the molecular weights of ethylene and propylene, respectively.

The product of reactivity ratio rlr2 was calculated according to Carman (C.J. Carman, R.A. Harrington and C.E. Wilkes, Macromolecules, 1977; 10, 536) as:

$$r_1 r_2 = 1 + \left( \frac{EEE+PEE}{PEP} + 1 \right) - \left( \frac{P}{E} + 1 \right) \left( \frac{EEE+PEE}{PEP} + 1 \right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

### Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

### Determination of Bi

The determination of Bi content in the solid catalyst component has been carried out via inductively coupled plasma emission spectroscopy on "I.C.P Spectrometer ARL Accuris".

The sample was prepared by analytically weighting in a $200\ cm^3$ volumetric flask $0.1 \div 0.3$ grams of catalyst. After slow addition of both ca. 10 milliliters of 65% v/v $HNO_3$ solution and ca. $50\ cm^3$ of distilled water, the sample undergoes a digestion for $4 \div 6$ hours. Then the volumetric flask is diluted to the mark with deionized water. The resulting solution is directly analyzed via ICP at the following wavelength: Bismuth, 223.06 nm.

Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

**Examples 1 - Preparation of the Ziegler-Natta solid catalyst**

Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in an amount of 3 mol% with respect to the magnesium is added before the feeding of the oil.

Procedure for the preparation of the solid catalyst component

Into a 500 ml round bottom flask, equipped with mechanical stirrer, cooler and thermometer, 300 ml of $TiCl_4$ were introduced at room temperature under a nitrogen atmosphere. After cooling to 0°C, 9.0 g of the spherical adduct (prepared as described above) were added while stirring, then diethyl 3,3-dipropylglutarate was sequentially added into the flask. The amount of charged internal donor was such to meet a Mg/donor molar ratio of 13. The temperature was raised to 100°C and maintained for 2 hours. Thereafter, stirring was stopped, the solid product was allowed to settle and the supernatant liquid was siphoned off at 100°C.

After siphoning, fresh $TiCl_4$ and an amount of 9,9-bis(methoxymethyl)fluorene for producing a Mg/diether molar ratio of 13 was added. The mixture was then heated at 120°C and kept at this temperature for 1 hour under stirring. Stirring was stopped again, the solid was allowed to settle and the supernatant liquid was siphoned off. The solid was washed with anhydrous hexane six times in a temperature gradient down to 60°C and one time at room temperature. The obtained solid was then dried under vacuum and analyzed.

Prepolymerization treatment

Before introducing the solid catalyst component described above into the polymerization reactors, it has been contacted with triethylaluminum (TEAL) and dicyclopentyldimethoxysilane (DCPMS, D donor) in a ratio reported on Table 1.

Polymerization

The polymerization of component A) is carried out in continuous in a series of two reactors equipped with devices to transfer the product from the first reactor to the second one. The polymerization was carried out in gas-phase polymerization reactor comprising two interconnected polymerization zones, a riser and a downcomer, no "barrier stream" has been used

The polymer (A) coming from the first reactor is discharged in a continuous flow and, after having been purged of unreacted monomers, is introduced, in a continuous flow, into the second stirred bed gas phase reactor. In the second reactor a copolymer of ethylene (B) is produced.

Quantities of monomers and hydrogen fed to the polymerization reactor are reported in Table 1.

**Comparative example 2**

**Preparation of the Ziegler-Natta solid catalyst**

Microspheroidal $MgCl_2 \cdot 2.1\ C_2H_5OH$ adduct has been prepared according to Example 1 of European patent application 728769. The solid catalyst component has been prepared according to Example 1 of European patent application 728769.

Before introducing the solid catalyst component described above into the polymerization reactors, it has been contacted with triethylaluminum (TEAL) and dicyclopentyldimethoxysilane (DCPMS, D donor) in a ratio reported on Table 1.

The polymerization has been carried out as in example 1. The data are reported in table 1.

Table 1

| Example | | 1 | Comp 2 |
|---|---|---|---|
| **PRECONTACT** | | | |
| Temperature | °C | 15 | 15 |
| Residence Time | min | 14 | 15 |
| TEAL/catalyst | wt/wt | 5 | 6 |
| TEAL/Ext. Donor | g/g | 20 | 30 |
| **PREPOLYMERIZATION** | | | |
| Temperature | °C | 20 | 30 |
| Residence Time | min | 9 | 13 |
| hydrogen | ppm | 0 | 228 |
| **POLYMERIZATION Gas loop** | | | |
| Temperature | bar-g | 68 | 69 |
| Pressure | bar-g | 28 | 28 |
| Residence Time | min | 65 | 79 |
| $H_2/C_3$ riser | mol/mol | 0.105 | 0.013 |
| Split | Wt% | 90 | 90 |
| **Gas phase reactor** | | | |
| $H_2/C2^{--}$ | mol/mol | 0.552 | 0.177 |
| C2/C2+C3 | mol/mol | 0.088 | 0.15 |
| Split | Wt% | 10 | 10 |
| C3 propylene, C2 ethylene H2 hydrogen | | | |

The polymer of example 1 and comparative example 2 have been characterized as reported in table 2

Table 2

| | | Ex 1 | Comp ex 2 |
|---|---|---|---|
| Component A | | | |
| MFR | g/10 min | 170 | 150 |
| Xs | Wt% | 1.8 | 2.6 |
| split | Wt% | 90 | 90 |
| Component B | | | |
| split | Wt% | 10 | 10 |
| Total composition | | | |
| Ethylene content | Wt% | 2.8 | 2.7 |
| XS | Wt% | 10.8 | 13 |
| Intrinsic viscosity xylene solubles 25°C | dl/g | 1.4 | 1.5 |

(continued)

| Component B | | | |
|---|---|---|---|
| Ethylene in the fraction insoluble in xylene at 25°C | Wt% | 1.52 | 1.23 |
| Ethylene in the fraction soluble in xylene at 25°C | Wt% | 19.40 | 22.62 |
| PEE sequences in the fraction soluble in xylene at 25°C | Mol% | 8.98 | 11.68 |
| PPE sequences | Mol% | 4.51 | 2.89 |
| PEE sequences in the fraction soluble in xylene at 25°C | Mol% | 9.7 | 12.7 |
| EEE sequences in the fraction soluble in xylene at 25°C | Mol% | 4.8 | 8.4 |
| rlr2 | | 2.48 | 2.34 |
| Characterization | | | |
| Tens mod | MPa | 1470 | 1470 |
| Charpy 23°C | Kj/m$^2$ | 3.6 | 3.4 |
| Haze | | 22 | 53 |

The haze of example 1 is considerably lower than the haze of comparative example 2.

## Claims

1. A polypropylene composition comprising:

   A) From 96 wt% to 80 wt%; of a propylene homopolymer having a fraction insoluble in xylene at 25°C greater than 90 wt%; and a melt flow rate, MFR, measured according to ISO 1133 at 230 °C with a load of 2.16 kg comprised between 80.0 g/10 min and 300.0 g/10 min;
   B) From 4 wt% to 20 wt%; of a propylene ethylene copolymer having an ethylene derived units content ranging from 18 wt% to 38 wt%;

   said polypropylene composition having:

   i) xylene soluble fraction at 25°C ranging from 5 wt% to 13.0 wt%;
   ii) the ethylene derived units content on the fraction insoluble in xylene at 25°C ranging from 0.5 wt% to 3.5 wt%;
   iii) the ethylene derived units content on the fraction soluble in xylene at 25°C ranging from 17.2 wt% to 27.0 wt%
   iv) the C$^{13}$ NMR sequences PPE (of the composition) ranging from 3.50 mol% to 5.65 mol% and the C$^{13}$ NMR sequences PEE measured on the fraction soluble in xylene at 25°C ranging from 7.85 mol% to 11.00 mol%;
   (v) melt flow rate, MFR, measured according to ISO 1133 at 230 °C with a load of 2.16 kg, comprised between 80.0 g/10 min and 150.0 g/10 min;

   the sum of the amounts of A) and B) being 100 wt% .

2. The polypropylene composition according to claim 1 wherein the propylene composition comprises from 85 wt% to 95 wt% of component A) and from 5 wt% to 15 wt% of component B).

3. The polypropylene composition according to anyone of claims 1-2 wherein the xylene soluble fraction at 25 °C ranges from 6 wt% to 12 wt%.

4. The polypropylene composition according to anyone of claims 1-3 wherein in component A) the melt flow rate, MFR, measured according to ISO 1133 at 230 °C with a load of 2.16 kg is comprised between 100.0 g/10 min and 250.0 g/10.

5. The polypropylene composition according to anyone of claims 1-4 wherein in component B) the melt flow rate, MFR, measured according to ISO 1133 at 230 °C with a load of 2.16 kg, ranges from 90.0 g/10 min and 130.0 g/10.

6. The polypropylene composition according to anyone of claims 1-5 wherein the ethylene derived units content on the fraction insoluble in xylene at 25°C ranges from 0.8 wt% to 2.5 wt%.

7. The polypropylene composition according to anyone of claims 1-6 wherein the ethylene derived units content on the fraction soluble in xylene at 25°C ranges from 17.8 wt% to 21.3 wt%.

8. The polypropylene composition according to anyone of claims 1-7 wherein the $C^{13}$ NMR sequences PPE range from 3.80 mol% to 5.00 mol and the $C^{13}$ NMR sequences PEE measured on the fraction soluble in xylene at 25°C range from 8.00 mol% to 10.80 mol%.

9. The polypropylene composition according to anyone of claims 1-8 wherein the melt flow rate, MFR, measured according to ISO 1133 at 230 °C with a load of 2.16 kg is comprised between 90.0 g/10 min and 130.0 g/10.

10. The polypropylene composition according to anyone of claims 1-9 wherein the propylene composition comprises from 93 wt% to 87 wt% of component A) and from 7 wt% to 13 wt% of component B).

11. The polypropylene composition according to anyone of claims 1-10 wherein the xylene soluble fraction at 25 °C ranges from 7 wt% to 11 wt%.

12. The polypropylene composition according to anyone of claims 1-11 wherein in component A) the melt flow rate, MFR, measured according to ISO 1133 at 230 °C with a load of 2.16 kg is comprised between 150.0 g/10 min and 220.0 g/10.

13. The polypropylene composition according to anyone of claims 1-2 wherein in component B) the melt flow rate, MFR, measured according to ISO 1133 at 230 °C with a load of 2.16 kg, ranges from 95.0 g/10 min and 120.0 g/10.

14. The polypropylene composition according to anyone of claims 1-13 wherein the intrinsic viscosity measured on the fraction soluble in xylene at 25°C ranges from 0.9 to 2.3 dl/g.

15. An injection molded article comprising the propylene composition of claims 1-14.

**Patentansprüche**

1. Polypropylenzusammensetzung, umfassend:

A) 96 Gew.% bis 80 Gew.% eines Propylenhomopolymers mit einer in Xylol bei 25 °C unlöslichen Fraktion von mehr als 90 Gew.%; und einer gemäß ISO 1133 bei 230 °C unter einer Last von 2,16 kg gemessenen Schmelzflussrate, MFR, die zwischen 80,0 g/10 min und 300,0 g/10 min liegt;
B) 4 Gew.% bis 20 Gew.% eines Propylen/Ethylen-Copolymers mit einem Gehalt an von Ethylen abgeleiteten Einheiten im Bereich von 18 Gew.% bis 38 Gew.%;

wobei die Polypropylenzusammensetzung aufweist:

i) eine in Xylol bei 25 °C lösliche Fraktion im Bereich von 5 Gew.% bis 13,0 Gew.%;
ii) einen Gehalt an von Ethylen abgeleiteten Einheiten in der in Xylol bei 25 °C unlöslichen Fraktion im Bereich von 0,5 Gew.% bis 3,5 Gew.%;
iii) einen Gehalt an von Ethylen abgeleiteten Einheiten in der in Xylol bei 25 °C löslichen Fraktion im Bereich von 17,2 Gew.% bis 27,0 Gew.%;
iv) wobei die $C^{13}$-NMR-Sequenzen PPE (der Zusammensetzung) im Bereich von 3,50 mol% bis 5,65 mol% liegen, und die $C^{13}$-NMR-Sequenzen PEE, gemessen an der in Xylol bei 25 °C löslichen Fraktion, im Bereich von 7,85 mol% bis 11,00 mol% liegen;
v) eine gemäß ISO 1133 bei 230 °C unter einer Last von 2,16 kg gemessene Schmelzflussrate, MFR, die zwischen 80,0 g/10 min und 150,0 g/10 min liegt;

wobei die Summe der Mengen von A) und B) 100 Gew.% beträgt.

**EP 4 127 055 B1**

**2.** Polypropylenzusammensetzung nach Anspruch 1, wobei die Propylenzusammensetzung 85 Gew.% bis 95 Gew.% Komponente A) und 5 Gew.% bis 15 Gew.% Komponente B) umfasst.

**3.** Polypropylenzusammensetzung nach einem der Ansprüche 1 bis 2, wobei die in Xylol bei 25 °C lösliche Fraktion im Bereich von 6 Gew.% bis 12 Gew.% liegt.

**4.** Polypropylenzusammensetzung nach einem der Ansprüche 1 bis 3, wobei in Komponente A) die gemäß ISO 1133 bei 230 °C unter einer Last von 2,16 kg gemessene Schmelzflussrate, MFR, zwischen 100,0 g/10 min und 250,0 g/10 liegt.

**5.** Polypropylenzusammensetzung nach einem der Ansprüche 1 bis 4, wobei in Komponente B) die gemäß ISO 1133 bei 230 °C unter einer Last von 2,16 kg gemessene Schmelzflussrate, MFR, im Bereich von 90,0 g/10 min bis 130,0 g/10 liegt.

**6.** Polypropylenzusammensetzung nach einem der Ansprüche 1 bis 5, wobei der Gehalt an von Ethylen abgeleiteten Einheiten in der in Xylol bei 25 °C unlöslichen Fraktion im Bereich von 0,8 Gew.% bis 2,5 Gew.% liegt.

**7.** Polypropylenzusammensetzung nach einem der Ansprüche 1 bis 6, wobei der Gehalt an von Ethylen abgeleiteten Einheiten in der in Xylol bei 25 °C löslichen Fraktion im Bereich von 17,8 Gew.% bis 21,3 Gew.% liegt.

**8.** Polypropylenzusammensetzung nach einem der Ansprüche 1 bis 7, wobei die $C^{13}$-NMR-Sequenzen PPE im Bereich von 3,80 mol% bis 5,00 mol liegen, und die $C^{13}$-NMR-Sequencen PEE, gemessen an der in Xylol bei 25 °C löslichen Fraktion, im Bereich von 8,00 mol% bis 10,80 mol% liegen.

**9.** Polypropylenzusammensetzung nach einem der Ansprüche 1 bis 8, wobei die gemäß ISO 1133 bei 230 °C unter einer Last von 2,16 kg gemessene Schmelzflussrate, MFR, zwischen 90,0 g/10 min und 130,0 g/10 min liegt.

**10.** Polypropylenzusammensetzung nach einem der Ansprüche 1 bis 9, wobei die Propylenzusammensetzung 93 Gew.% bis 87 Gew.% Komponente A) und 7 Gew.% bis 13 Gew.% Komponente B) umfasst.

**11.** Polypropylenzusammensetzung nach einem der Ansprüche 1 bis 10, wobei die in Xylol bei 25 °C lösliche Fraktion im Bereich von 7 Gew.% bis 11 Gew.% liegt.

**12.** Polypropylenzusammensetzung nach einem der Ansprüche 1 bis 11, wobei in Komponente A) die gemäß ISO 1133 bei 230 °C unter einer Last von 2,16 kg gemessene Schmelzflussrate, MFR, zwischen 150,0 g/10 min und 220,0 g/10 liegt.

**13.** Polypropylenzusammensetzung nach einem der Ansprüche 1 bis 2, wobei in Komponente B) die gemäß ISO 1133 bei 230 °C unter einer Last von 2,16 kg gemessene Schmelzflussrate, MFR, im Bereich von 95,0 g/10 min bis 120,0 g/10 liegt.

**14.** Polypropylenzusammensetzung nach einem der Ansprüche 1 bis 13, wobei die Grenzviskosität, gemessen an der in Xylol bei 25 °C löslichen Fraktion, im Bereich von 0,9 bis 2,3 dl/g liegt.

**15.** Spritzgegossener Artikel, umfassend die Propylenzusammensetzung nach den Ansprüchen 1 bis 14.

**Revendications**

**1.** Composition de polypropylène comprenant :

A) 96 % en poids à 80 % en poids d'un homopolymère de propylène présentant une fraction insoluble dans le xylène à 25 °C supérieure à 90 % en poids ; et un indice de fluidité à chaud, MFR, mesuré selon la norme ISO 1133 à 230 °C sous une charge de 2,16 kg, situé entre 80,0 g/10 min et 300,0 g/10 min ;
B) 4 % en poids à 20 % en poids d'un copolymère de propylène-éthylène présentant une teneur en motifs dérivés de l'éthylène située dans la plage de 18 % en poids à 38 % en poids ;

ladite composition de polypropylène présentant :

i) une fraction soluble dans le xylène à 25 °C située dans la plage de 5 % en poids à 13,0 % en poids ;

ii) la teneur en motifs dérivés de l'éthylène sur la fraction insoluble dans le xylène à 25 °C située dans la plage de 0,5 % en poids à 3,5 % en poids ;

iii) la teneur en motifs dérivés de l'éthylène sur la fraction soluble dans le xylène à 25 °C située dans la plage de 17,2 % en poids à 27,0 % en poids ;

iv) les séquences $^{13}$C-RMN de PPE (de la composition) situées dans la plage de 3,50 % en mole à 5,65 % en mole et les séquences $^{13}$C-RMN de PEE mesurées sur la fraction soluble dans le xylène à 25 °C situées dans la plage de 7,85 % en mole à 11,00 % en mole ;

(v) un indice de fluidité à chaud, MFR, mesuré selon la norme ISO 1133 à 230 °C sous une charge de 2,16 kg, situé entre 80,0 g/10 min et 150,0 g/10 min ;

la somme des quantités de A) et B) valant 100 % en poids.

2. Composition de polypropylène selon la revendication 1, la composition de propylène comprenant 85 % en poids à 95 % en poids de constituant A) et 5 % en poids à 15 % en poids de constituant B).

3. Composition de polypropylène selon l'une quelconque des revendications 1 à 2, la fraction soluble dans le xylène à 25 °C étant située dans la plage de 6 % en poids à 12 % en poids.

4. Composition de polypropylène selon l'une quelconque des revendications 1 à 3, dans laquelle, dans le constituant A), l'indice de fluidité à chaud, MFR, mesuré selon la norme ISO 1133 à 230 °C sous une charge de 2,16 kg, est situé entre 100,0 g/10 min et 250,0 g/10.

5. Composition de polypropylène selon l'une quelconque des revendications 1 à 4, dans laquelle, dans le constituant B), l'indice de fluidité à chaud, MFR, mesuré selon la norme ISO 1133 à 230 °C sous une charge de 2,16 kg, est situé entre 90,0 g/10 min et 130,0 g/10.

6. Composition de polypropylène selon l'une quelconque des revendications 1 à 5, la teneur en motifs dérivés de l'éthylène sur la fraction insoluble dans le xylène à 25 °C étant située dans la plage de 0,8 % en poids à 2,5 % en poids.

7. Composition de polypropylène selon l'une quelconque des revendications 1 à 6, la teneur en motifs dérivés de l'éthylène sur la fraction soluble dans le xylène à 25 °C étant située dans la plage de 17,8 % en poids à 21,3 % en poids.

8. Composition de polypropylène selon l'une quelconque des revendications 1 à 7, les séquences $^{13}$C-RMN de PPE étant situées dans la plage de 3,80 % en mole à 5,00 moles et les séquences $^{13}$C-RMN de PEE mesurées sur la fraction soluble dans le xylène à 25 °C étant situées dans la plage de 8,00 % en mole à 10,80 % en mole.

9. Composition de polypropylène selon l'une quelconque des revendications 1 à 8, l'indice de fluidité à chaud, MFR, mesuré selon la norme ISO 1133 à 230 °C sous une charge de 2,16 kg, étant situé entre 90,0 g/10 min et 130,0 g/10.

10. Composition de polypropylène selon l'une quelconque des revendications 1 à 9, la composition de propylène comprenant de 93 % en poids à 87 % en poids de constituant A) et 7 % en poids à 13 % en poids de constituant B).

11. Composition de polypropylène selon l'une quelconque des revendications 1 à 10, la fraction soluble dans le xylène à 25 °C étant située dans la plage de 7 % en poids à 11 % en poids.

12. Composition de polypropylène selon l'une quelconque des revendications 1 à 11, dans laquelle, dans le constituant A), l'indice de fluidité à chaud, MFR, mesuré selon la norme ISO 1133 à 230 °C sous une charge de 2,16 kg, est situé entre 150,0 g/10 min et 20,0 g/10.

13. Composition de polypropylène selon l'une quelconque des revendications 1 à 2, dans laquelle, dans le constituant B), l'indice de fluidité à chaud, MFR, mesuré selon la norme ISO 1133 à 230 °C sous une charge de 2,16 kg, est situé entre 95,0 g/10 min et 120,0 g/10.

14. Composition de polypropylène selon l'une quelconque des revendications 1 à 13, la viscosité intrinsèque mesurée sur la fraction soluble dans le xylène à 25 °C étant située dans la plage de 0,9 à 2,3 dl/g.

15. Article moulé par injection comprenant la composition de propylène selon les revendications 1-14.

**EP 4 127 055 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008074423 A
- US 4399054 A
- US 4469648 A
- WO 9844009 A
- EP 728769 A